# EUROPÄISCHE PATENTSCHRIFT

(11) **EP 0 355 648 B1**
(45) Veröffentlichungstag und Bekanntmachung des Hinweises auf die Patenterteilung: **04.10.1995**
(21) Anmeldenummer: 89114996.5
(22) Anmeldetag: 14.08.1989
(51) Int. Cl.: F16J 15/44, F01D 11/02

(54) **Einrichtung zur Abdichtung von durch Medien, wie Flüssigkeiten und/oder Gasen, unterschiedlichen Druckes beaufschlagten Räumen, insbesondere für Turbomaschinen**
Sealing device for spaces in turbomachinery exposed to different pressures by media like liquids and/or gases
Dispositif d'étanchéification d'espaces dans des turbomachines exposées à des pressions différentes par des milieux comme des liquides et/ou gaz

(30) Priorität: 25.08.1988 DE 3828833
(43) Veröffentlichungstag der Anmeldung: 28.02.1990
(73) Patentinhaber: MTU MOTOREN- UND TURBINEN-UNION MÜNCHEN GMBH, D-80976 München (DE)
(72) Erfinder: Weiler, Wolfgang, D-8060 Dachau (DE)

(56) Entgegenhaltungen:
- CH-A- 470 612
- US-A- 3 847 403

## Beschreibung

Die Erfindung bezieht sich auf eine Einrichtung zur Abdichtung von durch Medien wie Flüssigkeiten und/oder Gasen unterschiedlichen Druckes beaufschlagten Räumen, insbesondere für Turbomaschinen, bei der ein Dichtring in einer zylindrischen Gehäuseeinrichtung unter Ausbildung einer Sekundärdichtung angeordnet ist und gegenüber einem angrenzenden Rotorabschnitt einen radialen Dichtspalt als Primärdichtung bereitstellt.

In der Praxis bereitet es nach wie vor Schwierigkeiten, Dichtungen der eingangs genannten Art berührungsfrei arbeiten zu lassen sowie mit einer verhältnismäßig geringen radialen Bauhöhe zu gestalten; und zwar zwischen sich drehenden und stehenden bzw. zwischen mit unterschiedlichen Drehzahlen um eine gemeinsame Achse rotierenden Bauteilen bzw. Wellenabschnitten.

Allgemein bekannte Labyrinthdichtungen haben zwar den Vorteil, daß sie axial und radial praktisch berührungslos arbeiten sowie nahezu unbegrenzte Umfangsgeschwindigkeiten ermöglichen; diesen an sich vorteilhaften Merkmalen stehen jedoch die wesentlichen Nachteile hinsichtlich einer verhältnismäßig großen axialen Baulänge sowie verhältnismäßig hoher Dichtungsleckflüsse gegenüber.

Für die genannten Dichtzwecke sind Bürstendichtungen allgemein bekannt, deren eine Borstenenden an einem Stator fest verankert sind und deren andere freie Borstenenden in schleifender Kontaktierung gegen den Rotor oder einen Wellenabschnitt gerichtet sind. Derartige Bürstendichtungen lassen zwar hohe Umfangsgeschwindigkeiten zu und ermöglichen geringe axiale Baulänge; sie benötigen aber große radiale Einbauhöhe und bewirken durch ständig schleifende Kontaktierung Verschleiß der Borsten bzw. örtlichen Materialabrieb an der betreffenden Rotorgegenfläche.

Ferner sind radiale Gleitringdichtungen bekannt, die aus einem Gehäuse, dem Gleitring, einem in axialer Richtung federnden Element und der dazugehörigen Welle bzw. dem dazugehörenden Wellenabschnitt aufgebaut sind; die Primärdichtung wird also zwischen der betreffenden Innenfläche des Gleitrings und der Gegenfläche des Rotors bzw. eines Wellenabschnitts ausgebildet, und zwar im Wege des sich dabei ausbildenen Fluidspaltes aus der Druckdifferenz zwischen beiden abzudichtenden Räumen. Bei dieser bekannten Gleitringdichtung ist der Gleitring z.B. zwischen einer Tragschulter des Gehäuses auf der einen Seite und einer z.B. beweglichen Federplatte auf der anderen Seite mit Wirkung des Federelements abdichtend im Gehäuse geführt (Sekundärdichtung).

Derartige "einfach" aufgebaute Gleitringdichtungen können dann keine einwandfreien Dichtvoraussetzungen erfüllen, wenn es darum geht, z.B. Lagerräume in Gasturbinentriebwerken gegen den Triebwerkseinlauf bzw. die Triebwerksumgebung oder gegen den Abgasstrom abzudichten, also Örtlichkeiten, die üblicherweise ein niedrigeres Druckniveau haben als der Lagerraum vor der Dichtung. Außerdem beanspruchen Gleitringdichtungen ein großes Einbauvolumen und gewährleisten nur geringe Umfangsgeschwindigkeiten.

Die CH-PS 470 612 behandelt eine für Flüssigkeiten oder Gase geeignete Schwimmringdichtung zur Abdichtung unterschiedlich druckbeaufschlagter Räume am Durchtritt einer Welle durch eine Gehäusewandung; dabei ist ein zur Anpassung an die Bewegungen der Welle radial beweglicher Schwimmring vorgesehen; der Schwimmring bildet gegenüber der Welle einen luftlagerartigen Tragspalt als Primärdichtung aus; zwischen der Gehäusewandung und dem Schwimmring soll ein die axiale Anpreßkraft aus dem Raum mit dem höheren Fluiddruck übertragender, axial steifer Stützkörper vorgesehen sein; gemäß einer alternativen Ausführung soll der Stützkörper aus zur Welle achsparallelen Biegestäben bestehen; die axiale Bemessung der Biegestäbe definiert im bekannten Fall die Spaltweite eines engen axialen Dichtspaltes, der radial oberhalb der Biegestäbe, zwischen einem radial äußeren Absatz der Gehäusewandung gegenüber dem Schwimmring ausgebildet ist; dieser enge axiale Dichtspalt soll den freien Durchtritt des Sperrluftfluids hohen Druckes zu den Stäben verhindern, die in einer gegenüber der Welle offenen Ausnehmung der Gehäusewand angeordnet sind, wobei die offene Ausnehmung Teil des Raums mit dem niedrigen Druck des Systems ist. Absperrfluid hohen Druckes soll dabei über eine Leitung in der Gehäusewandung radial von außen gegen die Welle und von dort über radiale und axiale Spalte zwischen Schwimmring und Wandung, dem engen axialen Dichtspalt unmittelbar zugeführt werden.

Der Erfindung liegt die Aufgabe zugrunde, eine aus der CH-A-470,612 bekannte Dichtungseinrichtung anzugeben, die unter Gewährleistung verhältnismäßig hoher Umfangsgeschwindigkeiten bei vergleichsweise geringer Einbauhöhe bzw. eines verhältnismäßig geringen Einbauvolumens praktisch verschleißlos und materialabrieblos arbeitet.

Die gestellte Aufgabe ist mit den Merkmalen des Patentanspruchs 1 erfindungsgemäß gelöst.

Es ergibt sich eine Dichtungseinrichtung, bei der im Bereich der Dichtstelle ein Dichtring konzentrisch zur Welle so angeordnet ist, daß zwischen Welle und Dichtring ein radialer Tragspalt entsteht, der klein und in der bei Luftlagern üblichen Größenordnung ausgebildet ist. Daraus resultiert, daß der Dichtring wie ein Luftlager statischen und dynamischen Achsversetzungen der Wellenmitte folgt. Dieser Tragspalt zwischen Dichtring und Welle definiert die sogenannte "Primärleckage" der Dichtung. Der Dichtring seinerseits ist über, im wesentlichen achsparallel oder in einem gewissen Winkel zur Dichtungsachse angeordnete biegestabartige Federelemente beispielsweise gegenüber dem Stator (Gehäuse) der Dichtungseinrichtung zentriert, wobei Länge, Anzahl und Anordnung der biegestabartigen Federelemente von der Dynamik der Maschine an der Dichtstelle abhängen. Zwischen dem Gehäuse als Stator der Dichtungseinrichtung und dem Dichtring kann entweder auf einem Durchmesser radial unterhalb (s.h.: Ansprüche 1 oder 2 sinngemäß) oder radial unterhalb und außerhalb des Durchmessers eines Biegestabverbandes (s.h.: Anspruch 3 sinngemäß) der enge axiale Drosselspalt angeordnet sein, der in einer Größenordnung von 0,02 - 0,03 mm angesiedelt ist und die sogenannte "Sekundärleckage" der Dichtung bestimmt. Um die genannten elemente der Dichtung kann eine zylindrische Schutzkappe bzw. der ringförmige Haubenkörper (Anspruch 2) angeordnet sein, der gegebenenfalls durch ein Bauteil, z.B. einen Wellenabschnitt (Anspruch 5), an dem die Dichtung anzuordnen ist, gebildet werden kann. Je nach Durchflußrichtung der Dichtung (P1>P2 oder P2>P1) ist eine Verbindung der biegestabartigen Federelemente mit dem Dichtring durch eine bekannte Verbindungstechnik, wie Schweißen, Löten, Kleben oder Klemmen vorteilhaft.

Je nach den dynamischen Verhältnissen können die biegestabartigen Federelemente einzeln freistehend (Federung ohne Dämpfung) oder (Anspruch 6) aus einem bürstenartig gepackten Verband aneinander anliegender Stäbe in der Kombination aus Federung und Dämpfung angeordnet bzw. aufgebaut sein.

Die Erfindung (Anspruch 1) mit weiteren Ausgestaltungen nach den Patentansprüchen 2 bis 6 ist anhand der Zeichnungen beispielsweise weiter erläutert; es zeigen:
- Fig. 1: die schematisch als Mittellängsschnitt dargestellte Dichtungseinrichtung in einer ersten Ausführungsform,
- Fig. 2: die schematisch als Mittellängsschnitt dargestellte Dichtungseinrichtung in einer zweiten Ausführungsform,
- Fig. 3: die schematisch als Mittellängsschnitt dargestellte Dichtungseinrichtung in einer dritten Ausführungform und
- Fig. 4: ein Doppeldichtungskonzept in kombinierter Zuordnungen von Triebwerkseinzelheiten, hier ebenfalls im wesentlichen als Mittellängsschnitt dargestellt.

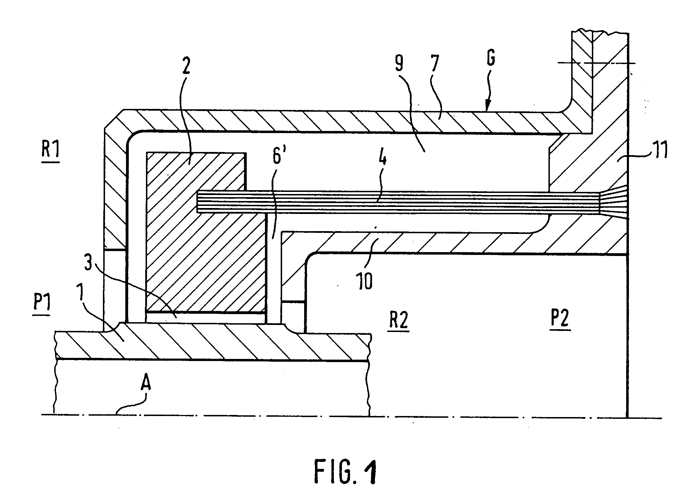

Fig. 1 zeigt eine erste Einrichtung zur Abdichtung von durch Medien, wie Flüssigkeiten und/oder Gasen unterschiedlichen Druckes (P1>P2) beaufschlagten Räumen R1,R2, hier bei einer Turbomaschine, bei der ein Dichtring 2 in einem zylindrischen Gehäuse G unter Ausbildung einer Sekundärdichtung angeordnet ist und gegenüber einem angrenzenden Wellenabschnitt 1 des Rotors einen radialen luftlagerartigen Tragspalt 3 als Primärdichtung bereitstellt. Dabei ist der Dichtring 2 mittels am zylindrischen Gehäuse G einseitig verankerter, hier parallel zur Maschinenachse A angeordneter biegestabartiger Federelemente 4 zentriert.

Das Gehäuse G bildet mit einem Haubenkörper 7 und einem Wandabschnitt 10, die beide an den Dichtring 2 angrenzen, einen mit beiden Räumen R1,R2 kommunizierenden Ringraum 9 aus. Aus Fig. 1 ist ferner erkennbar, daß für die Sekundärdichtung ein enger axialer Drosselspalt 6' zwischen der freien Stirnfläche des sich parallel, unterhalb der Federelemente 4 erstreckenden Wandabschnitts 10 und einer äußeren Gegenfläche des Dichtringes 2 ausgebildet ist. Über den engen axialen Drosselspalt 6' steht der Ringraum 9 mit dem einen Raum R2 in Verbindung. Ferner steht der Ringraum 9 über einen radialen Abstandspalt und einen axialen Leckspalt - jeweils zwischen Haubenkörper 7 und Dichtring 2 - mit dem anderen Druckraum R1 in Verbindung.

Der Ausführungsform nach Fig. 1 ist ferner entnehmbar, daß das Gehäuse G jeweils aus dem ringförmigen Haubenkörper 7 und einem mit diesem fest verbundenen, den Wandabschnitt 10 enthaltenen Gehäusebauteil 11, z.B. als Stator der Dichtung, zusammengesetzt ist. Am Gehäusebauteil 11 sind die biegestabartigen Federelemente 4 einseitig festgelegt, die innerhalb des Ringraums 9 angeordnet sind.

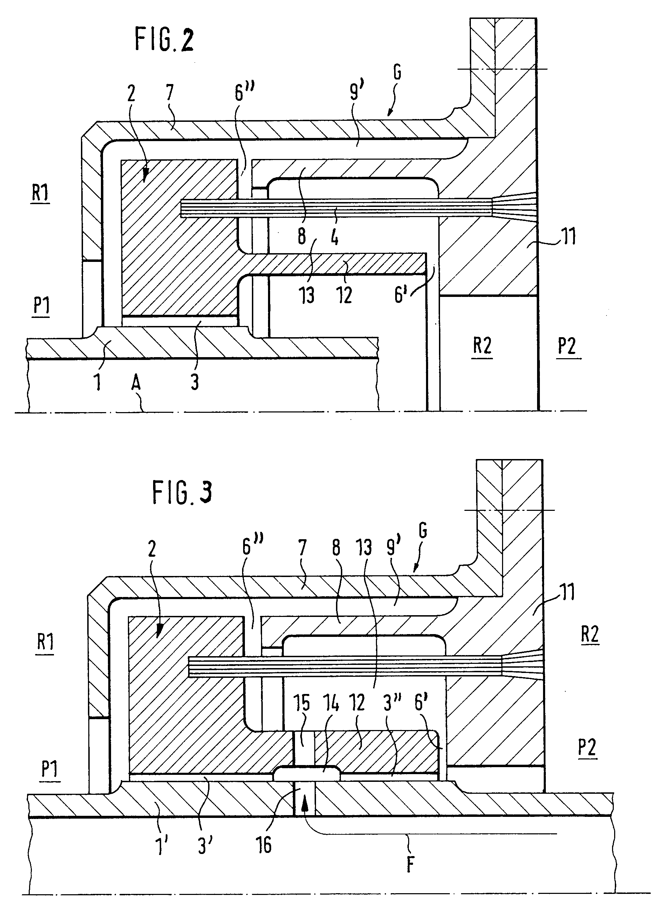

Fig. 2 ist eine abgewandelte Ausführungsform einer Dichtungseinrichtung, wie folgt:
Es erstreckt sich der Ringraum 13 zwischen einem ersten und zweiten, jeweils im wesentlichen parallel unterhalb bzw. oberhalb der Federelemente 4 verlaufenden Wandabschnitt 12 bzw. 8 des Dichtringes 2 und des Gehäusebauteils 11, an dem die Federelemente 4 fest verankert sind; jeweils zwischen den freien Stirnflächen des ersten und zweiten Wandabschnitts 12 bzw. 8 und betreffenden Gegenflächen des Gehäusebauteils 11 einerseits und des Dichtringes 2 andererseits sind erste und zweite enge axiale Drosselspalte 6' ,6'' für die Sekundärdichtung ausgebildet; der Ringraum 13 ist über den ersten Drosselspalt 6' an den einen Druckraum R2 und über den zweiten Drosselspalt 6'' an eine Ringkammer 9' angeschlossen; die Ringkammer 9' ist von einem den zweiten Wandabschnitt 8 und den Dichtring 2 radial mit Abstand umgebenden ringförmigen Haubenkörper 7 des Gehäuses G gebildet; der Haubenkörper 7 ist mit dem Gehäusebauteil 11 fest verbunden und verbindet die Ringkammer 9' über den axialen Leckspalt am Dichtring 2 mit dem anderen Druckraum R1.

Fig. 3 veranschaulicht eine gegenüber im wesentlichen Fig. 2 dahingehend abgewandelte Ausführungsform einer Dichtungseinrichtung, bei der der betreffende erste Wandabschnitt 12 des Dichtringes 2 gegenüber einem Wellenabschnitt 1' des Rotors 2 durch einen Ringspalt 14 voneinander getrennte luftlagerartige Tragspalte 3' ,3'' ausbilden soll. Dabei erfolgt eine welleninnenseitige Sperrfluidzufuhr F vom Ringspalt 14 aus in die Tragspalte 3' ,3'' sowie in den zwischen dem ersten und dem zweiten Wandabschnitt 12 bzw. 8 ausgebildete Ringraum 13. Aus demgenannten Ringraum 13 kann dann das Sperrfluid F über den ersten axialen Drosselspalt 6' in den einen Raum R2 und über den zweiten axialen Drosselspalt 6'' und über die Ringkammer 9' in den anderen Raum R1 abfließen. Mit den beiden luftlagerartigen Tragspalten 3' bzw. 3'' wird also beim Ausführungsbeispiel nach Fig. 3 eine "labyrinthartige" Doppeldichtung ausgebildet. Insbesondere dieses zuletzt gezeigte und beschriebene Ausführungsbeispiel nach Fig. 3 ist für den Einsatz bei Gasturbinentriebwerken geeignet, wobei es darum geht, z.B. einen maschinenseitigen, einem ölgeschmierten Lager nachgeschalteten Raum R1 gegenüber z. B. dem Triebwerkseinlauf (Raum R2) abzudichten bzw. den zuvor besprochenen Maschinenraum, der einem ölgeschmierten Lager nachgeschaltet ist (Raum R1) gegenüber dem Triebwerksabgasstrom (Raum R2) abzudichten.

Zu Fig. 3 wäre im übrigen noch zu vermerken, daß die Zufuhr des Sperrfluids, z.B. in Form von Luft oder als Gas, von der Innenseite einer den Wellabschnitt 1' ausbildenden Hohlwelle zugeführt wird, und zwar über radiale Bohrungen 16 dieses Wellenabschnitts 1' in den zuvor schon genannten Ringspalt 14, von wo aus ein übriger Teil des Sperrfluids F über im ersten Wandabschnitt 12 des Dichtringes 2 enthaltene Radialbohrungen 15 in den zuvor schon genannten Ringraum 13 gelangt. Die genannten Bohrungen 15 bzw. 16 liegen sich in Achsrichtung fluchtend genau einander gegenüber.

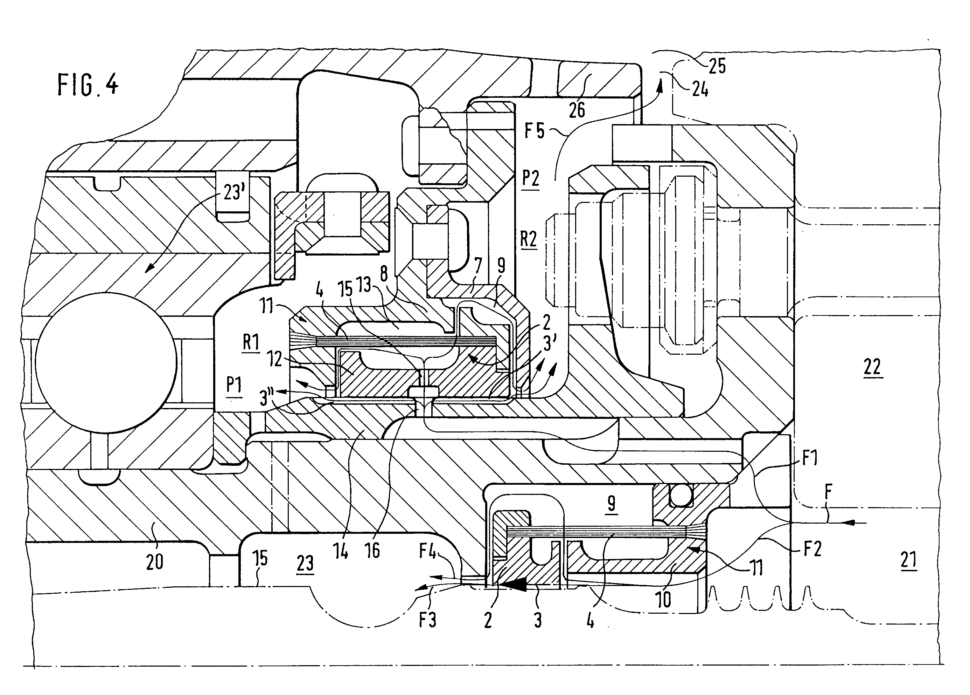

Fig. 4 veranschaulicht die am betreffenden Verdichterabschnitt eines Gasturinentriebwerkes ausgebildete Anordnung zweier verschiedener Konfigurationen der Dichtungseinrichtung, und zwar in der Zeichnung, im wesentlichen rechts unten, die Dichtungskonfiguration nach der zuvor beschriebenen Fig. 1, hier jedoch als Zwischenwellendichtung zwischen einer Innenwelle 15 und einer Außenwelle 20 gestaltet und etwa in der Mitte der Fig. 4, die dortige Ausbildung und Anordnung einer
Dichtungs-
konfiguration wie sie sinngemäß zuvor in Fig. 3 abgehandelt und beschrieben worden ist. Gemäß Fig. 4 wird also unter Anwendung einer in Fig. 1 schon ausführlich beschriebenen und behandelten einen
Dichtungs-
einrichtung der betreffende radiale luftlagerartige Tragspalt 3 zwischen dem zugehörigen Dichtungsring 2 und einer betreffenden Umfangsgegenfläche der hohlzylindrischen Innenwelle 15 ausgebildet. Die Innenwelle 15 ist koaxial durch die betreffende Außenwelle 20 des Gasgenerators des Gasturbinentriebwerkes geführt. Die Innenwelle 15 kann auf der einen Seite kraftschlüssig mit einer Niederdruckturbine des Gasturbinentriebwerkes gekoppelt sein, die der Gaserzeugerturbine des Gasgenerators aero- thermodynamisch nachgeschaltet ist. Die Innenwelle 15 kann beispielsweise unter Zwischenschaltung entsprechender Über- oder Untersetzungsgetriebe mit einem Hubschrauberrotor gekoppelt sein. Mit anderen Worten kann also eine geeignete Leistungsentnahme von der Innenwelle 15 triebwerksstirnseitig, also auf der von der Nutzleistungsturbine abgewandten Seite erfolgen. Das Sperrfluid F kann in Form von Sperrluft aus einem koaxialen Ringkanal 21, der zwischen der Dichtung auf der einen Seite sowie zwischen einer Laufradscheibe 22 einerseits und der betreffenden zuvor schon genannten Innenwelle 15 ausgebildet ist, zugeführt werden. Es wird als die im Sinne der Fig. 1 ausgebildete Dichtungseinrichtung von einem aus F abgespaltenen Teilluftstrom F2 heraus versorgt. Unter Bereitstellung der dortigen Sekundärdichtung fließt dann wiederum ein Teilluftstrom F4 aus dem Ringraum 9 der Dichtungseinrichtung in einen Ringraum 23 ab, der zwischen der Außenwelle 20 und der Innenwelle 15 ausgebildet ist. Aus der Primärdichtung (radialer Lufttragspalt 3) fließt ein übriger Teilleckluftstrom F3 ebenfalls in den zuvor besprochenen Ringraum 23, zwischen der Innen- und Außenwelle 15,20, ab.

Die übrige gemäß Fig. 3 ausgebildete Dichtungseinrichtung wird mit einem aus F abgespaltenen weiteren Teilsperrluftstrom F1 versorgt. Die gemäß Fig. 3 ausgebildete Dichtung dichtet einen Raum R1 ab, der einem ölgeschmierten Kugellager 23' nachgeschaltet ist. Im Betrieb muß also davon ausgegangen werden, daß der betreffende Raum R1 von einem gasförmigen Ölnebel aus dem Lager 23' beaufschlagt ist, wobei zugrunde gelegt ist, daß der Fluiddruck P1 im Maschinenraum R1 größer ist als derjenige Druck P2, der im Raum R2, hinter der Dichtungseinrichtung herrscht. Die radialen luftlagerartigen Tragspalte 3' bzw. 3'' werden hier also zwischen dem Wandabschnitt 12 des Dichtringes 2 auf der einen Seite und entsprechenden Gegenflächen des Wellenabschnitts 14 ausgebildet. Der Wellenabschnitt 14 sitzt mitrotierend auf der Außenwelle 20 des Gasgenerators. Ein aus Primär- und Sekundärrestluftanteilen gespeister Restleckflußstrom F5 fließt dann aus dem der Dichtungseinrichtung nachgeschaltete Raum R2 über einen Ringspalt 24 in den Luftansaugkanal 25 des Triebwerks ab. Der zuvor genannte Ringspalt 24 ist zwischen die Innenwand des Luftansaugkanals 25 ausbildenden Statorstrukturen 26 auf der einen Seite und einer oberen äußeren Stirnfläche der zuvor schon genannten Radscheibe 22 ausgebildet.

## Patentansprüche

1. Dichtungseinrichtung zwischen von Flüssigkeiten und/oder Gasen mit unterschiedlichem Druck (P1;P2) beaufschlagten Räumen (R1;R2), insbesondere für Turbomaschinen, mit einem zylindrischen Gehäuse (G) und einem Dichtring (2), worin:
- der Dichtring (2) durch biegestabartige Federelemente (4) zentriert ist, die etwa parallel zur Maschinenachse (A) verlaufen und auf einer Seite des Gehäuses (G) verankert sind,
- der Dichtring (2) gegenüber einem Rotorabschnitt (1) einen radialen luftlagerartigen Tragspalt (3) als Primärdichtung zwischen beiden Räumen (R1;R2) ausbildet,
- die Federelemente (4) in einem von Abschnitten des Gehäuses (G) und des Dichtringes (2) eingegrenzten Ringraum (9,13) angeordnet sind,
- der Ringraum (9,13) einerseits über einen radial unterhalb der Federelemente (4) angeordneten engen, axialen Drosselspalt (6') für die Sekundärdichtung mit dem einen Druckraum (R2) in Verbindung steht,
- der enge axiale Drosselspalt (6') zwischen dem Dichtring (2) und einer Gehäusestirnfläche ausgebildet ist,
- der Ringraum (9,13) andererseits über einen radialen Abstandsspalt und einen axialen Leckspalt, zwischen dem Dichtring (2) und dem Gehäuse (G), mit dem anderen Druckraum (R1) in Verbindung steht.

2. Einrichtung nach Anspruch 1, dadurch gekennzeichnet, daß das Gehäuse (G) in gemeinsamer Ausbildung des Ringraums (9) mit dem Dichtring (2) aus einem ringförmigen Haubenkörper (7) und einem mit diesem fest verbundenen Gehäusebauteil (11) zusammengesetzt ist, an dem die Federelemente (4) festgelegt sind, und das mit einem sich im wesentlichen parallel unterhalb der Federelemente (4) erstreckenden kenden Wandabschnitt (10) versehen ist, gegenüber dessen freier Stirnfläche der Dichtring (2) den engen axialen Drosselspalt (6') ausbildet, und worin zwischen dem Haubenkörper (7) und dem Dichtring (2) der radiale Abstandsspalt und der axiale Leckspalt zur Verbindung des Ringraums (9) mit dem anderen Druckraum (R2) ausgebildet sind.

3. Einrichtung nach Anspruch 1, dadurch gekennzeichnet, daß
- sich der Ringraum (13) zwischen einem ersten und einem zweiten, jeweils im wesentlichen parallel unterhalb bzw. oberhalb der Federelemente (4) verlaufenden Wandabschnitt (12 bzw. 8) des Dichtringes (2) und eines Gehäusebauteils (11) erstreckt, an dem die Federelemente (4) fest verankert sind,
- jeweils zwischen den freien Stirnflächen des ersten und zweiten Wandabschnitts (12 bzw. 8) und betreffenden Gegenflächen des Gehäusebauteils (11) einerseits und des Dichtringes (2) andererseits erste und zweite enge axiale Drosselspalte (6', 6'') für die Sekundärdichtung ausgebildet sind,
- der Ringraum (13) über den ersten Drosselspalt (6') an den einen Druckraum (R2) und über den zweiten Drosselspalt (6'') an eine Ringkammer (9') angeschlossen ist,
- die Ringkammer (9') von einem den zweiten Wandabschnitt (8) und den Dichtring (2) radial mit Abstand umgebenden ringförmigen Haubenkörper (7) des Gehäuses (G) gebildet ist,
- der Haubenkörper (7) mit dem Gehäusebauteil (11) fest verbunden ist und die Ringkammer (9') über den axialen Leckspalt am Dichtring (2) mit dem anderen Druckraum (R1) verbindet.

4. Einrichtung nach Anspruch 3, dadurch gekennzeichnet, daß der am Dichtring (2) angeordnete erste Wandabschnitt (12) gegenüber dem Rotorabschnitt (1') zwei durch einen Ringspalt (14) voneinander getrennte luftlagerartige Tragspalte (3' ,3'') ausbildet, wobei eine welleninnenseitige Sperrfluidzufuhr (F) vom Ringspalt (14) aus in die Tragspalte (3' ,3'') sowie in den zwischen dem ersten und dem zweiten Wandabschnitt (12,8) sich erstreckenden Ringraum (13) vorgesehen ist, aus der das Sperrfluid (F) über den ersten axialen Drosselspalt (6') in den einen Druckraum (R2) und über den zweiten axialen Drosselspalt (6'') und über die Ringkammer (9') in den anderen Druckraum (R1) abfließt.

5. Einrichtung nach einem oder mehreren der Ansprüche 2 bis 4, dadurch gekennzeichnet, daß sie zwischen koaxial aneinander gelagerten Rotoren oder Wellen (15,20) einer Turbomaschine, insbesondere eines Gasturbinentriebwerks, angeordnet ist, wobei der ringförmige Haubenkörper von einem entsprechend ausgesparten Abschnitt der einen Welle (20) gebildet ist.

6. Einrichtung nach einem oder mehreren der Ansprüche 1 bis 5, dadurch gekennzeichnet, daß die Federelemente aus einem bürstenartig gepackten Verband aneinander anliegender Stäbe in der Kombination aus Federung und Dämpfung aufgebaut sind.

## Claims

1. Device for sealing between chambers (R1; R2) to which liquids and/or gases are admitted at different pressures (P1; P2), particularly for turbomachines, with a cylindrical housing (G) and a sealing ring (2), in which:
- the sealing ring (2) is centred by flexible rod-like spring elements (4) which extend approximately parallel to the axis (A) of the machine and are anchored to one side of the housing (G),
- the sealing ring (2) forms, as the primary seal between the two chambers (R1; R2), a radial bearing gap (3) like an air bearing, opposite a rotor portion (1),
- the spring elements (4) are disposed in an annular chamber (9, 13) bounded by portions of the housing (G) and of the sealing ring (2),
- the annular chamber (9, 13) is in communication, on one side with one pressure chamber (R2), via a narrow axial choke gap (6') for secondary sealing disposed radially below the spring elements (4).
- the narrow axial choke gap (6') is formed between the sealing ring (2) and an end face of the housing,
- the annular chamber (9, 13) is in communication, on the other side, with the other pressure chamber (R1), via a radial spacing gap and an axial leakage gap between the sealing ring (2) and the housing (G).

2. Device according to Claim 1, characterized in that the housing (G) is composed of an annular cap body (7) and a housing element (11) fixed firmly thereto which, together with the sealing ring (2), form the annular chamber (9), the spring elements (4) being fixed to the housing element (11) which has a wall portion (10) which extends below and substantially parallel to the spring elements (4) and opposite the free end surface of which the sealing ring (2) forms the narrow axial choke gap (6'), the radial spacing gap and the axial leakage gap for connecting the annular chamber (9) with the other pressure chamber (R2) being formed between the cap body (7) and the sealing ring (2).

3. Device according to Claim 1, characterized in that
- the annular chamber (13) extends between first and second wall portions (12 and 8) of the sealing ring (2) and of a housing element (11) to which the spring elements (4) are firmly anchored, the wall portions (12 and 8) extending substantially parallel to the spring element (4) below it and above it, respectively,
- first and second narrow axial choke gaps (6', 6'') are formed, respectively, for secondary sealing, between the free end surfaces of the first and second wall portions (12, and 8) and the opposite surfaces concerned of the housing element (11), on the one hand, and of the sealing ring (2), on the other hand,
- the annular chamber (13) is connected to the one pressure chamber (R2) by means of the first choke gap (6') and to an annular chamber (9') by means of the second choke gap (6''),
- the annular chamber (9') is formed by an annular cap body (7) of the housing (G) which surrounds the second wall portion (8) and the sealing ring (2) radially with clearance,
- the cap body (7) is connected firmly to the housing element (11) and connects the annular chamber (9') with the other pressure chamber (R1) via the axial leakage gap on the sealing ring (2).

4. Device according to Claim 3, characterized in that the first wall portion (12) arranged on the sealing ring (2) forms, opposite the rotor portion (1'), two bearing gaps (3', 3'') like air bearings separated from one another by an annular gap 14, a supply (F) of sealing fluid inside the shaft being provided from the annular gap (14) into the bearing gaps (3', 3'') as well as into the annular space (13) which extends between the first and second wall portions (12, 8) and from which the sealing liquid (F) flows into the one pressure chamber (R2) via the first axial throttle gap (6') and into the other pressure chamber (R1) via the second axial throttle gap (6'') and via the annular chamber (9').

5. Device according to one or more of Claims 2 to 4, characterized in that it is disposed between coaxially mounted rotors or shafts (15, 20) of a turbomachine, particularly a gas-turbine unit, the annular cap body being formed by a correspondingly recessed portion of one shaft (20).

6. Device according to one or more of Claims 1 to 5, characterized in that the spring elements are constructed from a brush-like assembly of rods bundled together in a springing and damping combination.

## Revendications

1. Dispositif de joint d'étanchéité entre des espaces (R1, R2) exposés à des pressions différentes (P1, P2) par des liquides et/ou des gaz, notamment pour des turbomachines, avec un carter cylindrique (G) et une bague d'étanchéité (2),
dispositif dans lequel :
- la bague d'étanchéité (2) est centrée par des éléments élastiques (4) en forme de barres flexibles, qui s'étendent à peu près parallèlement à l'axe (A) de la machine et sont ancrés sur un côté du carter (G),
- la bague d'étanchéité (2) forme, vis-à-vis d'une partie de rotor (1), une fente porteuse radiale (3) formant coussinet d'air, en tant que joint d'étanchéité primaire entre deux espaces (R1, R2),
- les éléments élastiques (4) sont disposés dans un espace annulaire (9, 13), délimité par des parties du carter (G) et de la bague d'étanchéité (2),
- l'espace annulaire (9, 13) est en liaison d'un côté avec l'un des espaces sous pression (R2) par l'intermédiaire d'une étroite fente axiale d'étranglement (6') pour le joint d'étanchéité secondaire, disposée radialement au dessous des éléments élastiques (4),
- l'étroite fente axiale d'étranglement (6') est formée entre la bague d'étanchéité (2) et une surface frontale du carter,
- l'espace annulaire (9, 13) est en liaison d'un autre côté avec l'autre espace sous pression (R1) par l'intermédiaire d'une fente radiale d'espacement et d'une fente axiale de fuite, entre la bague d'étanchéité (2) et le carter (G).

2. Dispositif selon la revendication 1, caractérisé en ce que le carter (G), dans la réalisation commune de l'espace annulaire (9) avec la bague d'étanchéité (2), est composé d'une structure annulaire de capot (7) et d'une partie constitutive de carter (11) rigidement fixée à cette structure et sur laquelle sont fixés les éléments élastiques (4), tandis qu'elle est munie d'une partie de paroi (10) s'étendant essentiellement parallèlement au-dessous des éléments élastiques (4) et vis-à-vis de la surface frontale libre de laquelle la bague d'étanchéité (2) forme l'étroite fente axiale d'étranglement (6'), tandis qu'entre la structure de capot (7) et la bague d'étanchéité (2) sont formées la fente d'espacement et la fente axiale de fuite pour relier l'espace annulaire (9) avec l'autre espace sous pression (R2).

3. Dispositif selon la revendication 1, caractérisé en ce que :
- l'espace annulaire (13) s'étend entre une première et une deuxième partie de paroi (12 ou bien 8) de la bague d'étanchéité (2) et d'un élément constitutif (11) du carter, parties de paroi s'étendant de façon essentiellement parallèle au dessous ou au dessus des éléments élastiques (4), tandis que les éléments élastiques (4) sont fermement ancrés sur l'élément constitutif (11) du carter,
- respectivement entre les surfaces frontales libres de la première et de la deuxième partie de paroi (12 ou bien 8) et les surfaces antagonistes correspondantes de l'élément constitutif (11) du carter d'une part, et de la bague d'étanchéité (2) d'autre part, sont formées une première et une deuxième étroite fente axiale d'étranglement (6', 6'') pour le joint d'étanchéité secondaire,
- l'espace annulaire (13) est raccordé par l'intermédiaire de la première fente d'étranglement (6') à l'un des espaces sous pression (R2), et par l'intermédiaire de la deuxième fente d'étranglement (6'') à une chambre annulaire (9'),
- la chambre annulaire (9') est formée d'une structure de capot (7) de forme annulaire du carter (G), entourant à une certaine distance radiale la seconde partie de paroi (8) et la bague d'étanchéité (2),
- la structure de capot (7) est rigidement reliée à l'élément constitutif (11) du carter et relie la chambre annulaire (9'), par l'intermédiaire de la fente axiale de fuite sur la bague d'étanchéité (2), à l'autre espace sous pression (R1).

4. Dispositif selon la revendication 3, caractérisé en ce que la première partie de paroi (12) disposée sur la bague d'étanchéité (2) forme, vis-à-vis de la partie de rotor (1'), deux fentes porteuses (3', 3'') constituant des coussinets d'air, séparées l'une de l'autre par une fente annulaire (14), tandis qu'il est prévu, du côté interne de l'arbre, une amenée (F) de fluide de blocage, à partir de la fente annulaire (14) dans les fentes porteuses (3', 3'') ainsi que dans l'espace annulaire (13) s'étendant entre la première et la deuxième partie de paroi (12, 8) espace à partir duquel le fluide de blocage (F) s'écoute par l'intermédiaire de la première fente axiale d'étranglement (6') dans l'un des espaces sous pression (R2), et par l'intermédiaire de la deuxième fente axiale d'étranglement (6'') et de la chambre annulaire (9'), dans l'autre espace sous pression (R1).

5. Dispositif selon l'une ou plusieurs des revendications 2 à 4, caractérisé en ce qu'il est disposé entre des rotors ou des arbres (15, 20), montés coaxialement ensemble, d'une turbomachine, notamment d'un groupe propulseur à turbine à gaz, tandis que la structure de capot de forme annulaire est formée par une partie évidée de façon appropriée de l'un des arbres (20).

6. Dispositif selon l'une ou plusieurs des revendications 1 à 5, caractérisé en ce que les éléments élastiques sont constitués d'un assemblage, condensé sous forme de brosse, de barres s'appliquant les unes contre les autres dans une combinaison d'élasticité et d'amortissement.
